(19) Europäisches Patentamt
European Patent Office
Office européen des brevets

(11) Publication number : **0 661 341 A1**

# (12) EUROPEAN PATENT APPLICATION

(21) Application number : **94309821.0**

(22) Date of filing : **23.12.94**

(51) Int. Cl.[6] : **C08K 5/34**, C08L 53/00, C08K 5/09, C08K 3/34

(30) Priority : **27.12.93 JP 332401/93**

(43) Date of publication of application : **05.07.95 Bulletin 95/27**

(84) Designated Contracting States : **BE DE FR GB IT NL**

(71) Applicant : **MITSUI TOATSU CHEMICALS, Inc.**
**2-5 Kasumigaseki 3-chome**
**Chiyoda-Ku Tokyo 100 (JP)**

(72) Inventor : **Sugihara, Eiichi**
**3-42-7-437 Hirado,**
**Totsuka-ku**
**Yokohama-shi, Kanagawa-ken (JP)**
Inventor : **Yokote, Sachio**
**1-20-25 Kotsubo**
**Zushi-shi, Kanagawa-ken (JP)**
Inventor : **Hoshino, Minoru**
**600-402 Kamisakunobe,**
**Takatsu-ku**
**Kawasaki-shi, Kanagawa-ken (JP)**
Inventor : **Iwata, Ineo**
**3-42-7-411 Hirado,**
**Totsuka-ku**
**Yokohama-shi, Kanagawa-ken (JP)**
Inventor : **Todoroki, Hideki**
**2882-4-3-5 Iijimacho,**
**Sakae-ku**
**Yokohama-shi, Kanagawa-ken (JP)**
Inventor : **Sasaki, Mikiko**
**311 Azashimokijiki,**
**Nangai-mura**
**Senboku-gun, Akita-ken (JP)**
Inventor : **Ogawa, Chihiro**
**3-42-7-301 Hirado,**
**Totsuka-ku**
**Yokohama-shi, Kanagawa-ken (JP)**
Inventor : **Masuda, Kazuhiko**
**3-42-7 Hirado,**
**Totsuka-ku**
**Yokohama-shi, Kanagawa-ken (JP)**

(74) Representative : **Harvey, David Gareth et al**
**Graham Watt & Co.**
**Riverhead**
**Sevenoaks Kent TN13 2BN (GB)**

## (54) Filled polypropylene composition containing zinc salts of fatty acids.

(57) A polypropylene resin composition comprises 100 parts by weight of a polypropylene, 2 to 100 parts by weight of an inorganic filler, 0.2 to 2.0 parts by weight of a metallic soap of a fatty acid having 15 to 20 carbon atoms and zinc, 0.1 to 0.5 part by weight of a phenolic antioxidant, and 0.1 to 1.0 part by weight of a hindered amine light stabilizer in which all hydrogen atoms of amine groups are replaced with alkyl groups, and has a melt index of 15 g/10 min or more.

When the propylene is a propylene ethylene block copolymer containing two kinds of propylene ethylene copolymerization parts having specific [$\eta$] values, fluidity can be improved, and the deterioration of impact strength, stiffness and heat resistance can be avoided by using the metallic soap of zinc, in contrast to the employment of calcium stearate which is the metallic soap usually used as an additive for the polypropylene. The stiffness, the impact strength and the heat resistance scarcely deteriorate even when wall thickness of molded articles is reduced, and hence the polypropylene resin composition makes it possible to reduce the wall thickness of exterior and interior materials of cars, which leads to the decrease of material costs, shortening of a molding cycle and weight reduction of the product.

EP 0 661 341 A1

The present invention relates to a polypropylene resin composition, and more specifically, a polypropylene resin composition having improved fluidity and injection moldability. Furthermore, it also relates to a polypropylene resin composition having improved fluidity and injection moldability as well as a good balance between stiffness and impact strength.

Polypropylene resin compositions have been used more and more as exterior materials such as bumpers and fenders, and interior materials such as pillars of cars, in place of metallic materials. Polypropylenes have been improved by methods which involve adding an ethylene-propylene elastomer (EPM or EPDM) to the polypropylene to enhance impact strength, and adding an inorganic filler such as talc to the polypropylene to improve flexural modulus. The polypropylene is a crystalline resin, and so its mold shrinkage factor is larger as compared with non-crystalline resins. A method has been utilized in which an elastomer such as the ethylene-propylene elastomer (EPM or EPDM) or an inorganic filler such as talc is added to the polypropylene to control and reduce the mold shrinkage factor to a low level.

Weight reduction of parts for a car decreases the consumption of fuel used for the running of the car, with the result that the amount of a carbon dioxide gas which is released into the atmosphere can be reduced, which leads to the protection of the environment. For weight reduction of the parts for a car or the like, there have been considered (a) lowering the specific gravity of component materials and (b) enhancing stiffness without the noticeable deterioration of the impact strength, thereby enabling a reduction of the wall thickness of the parts. Above all, decreasing the wall thickness of the parts is more desirable, because this technique permits a decrease of the cost of molding materials and an increase of cooling efficiency of molded parts as a result of the decrease of the wall thickness in the case where the resin is injection molded, and in consequence the productivity of the molded parts can also be improved advantageously.

In the injection molding method, however, the wall thickness of the parts depends upon the fluidity of the resin and the performance of a molding machine. For example, when a material having poor fluidity is used and a mold having a light gauge is used, the material is required to be forced into the light gauge with a large pressure at the time of feeding the resin to the mold, and thus if the molding machine capable of utilizing a large clamping force is not used, a problem such as the occurrence of mold opening or the like sometimes takes place. Molding machines capable of utilizing large clamping force are large and expensive, and a large installation area is required, which is not so economical. Where the wall thickness of the parts is reduced by enhancing the fluidity of the resin, enhancement of the fluidity can be achieved by using a polypropylene resin having a low molecular weight and a high melt index.

However, a decrease of the molecular weight of the resin gives rise to a deterioration of mechanical properties such as impact strength, tensile elongation at break and low brittle temperature, and for this reason, restriction is put on the decrease of the molecular weight of the resin. In order to prevent the deterioration of the impact strength to the utmost, a propylene ethylene block copolymer which can perform ethylene copolymerization with propylene after the polymerization of propylene is usually used as the polypropylene, and in addition, the molecular weight of a propylene homo-polymerization part is lowered to enhance the fluidity. Simultaneously, in order to enhance the impact strength, the molecular weight of a copolymerization part is increased to keep a balance between both the factors.

However, if the molecular weight of the propylene homo-polymerization part is excessively low, the impact strength, particularly Izod impact strength deteriorates rapidly. On the other hand, where molded articles comprising the polypropylene resin composition are used as the parts for a car or the like, the impact strength deteriorates rapidly at a temperature below the low brittle temperature.

Therefore, material having a reduced low brittle temperature and excellent impact strength at a low temperature has been desired.

In order to improve a polypropylene resin composition in the low brittle temperature, it is necessary to increase the molecular weight of the copolymerization part, and the higher the molecular weight of the copolymerization part is, the better the low temperature impact strength is.

It is difficult to prepare a polypropylene resin composition having high fluidity in which the ordinary temperature Izod and the low brittle temperature are satisfactory.

On the other hand, there has also been suggested a method of adding a metallic soap such as zinc stearate to a fiber of a polyolefin such as the polypropylene for the purpose of improving destaticization, dispersibility of a pigment or the like and fastness properties (e.g., U.S. Patent No. 2,984,634, Japanese Patent Nos. 15466/1962, 4477/1963 and 11023/1969, and Belg. Patent Nos. 617,280 and 614,776). However, even if zinc stearate is added to the polypropylene alone, the fluidity is not so improved, and if an excessive amount is added, heat resistance, flexural modulus and impact strength are adversely affected. Calcium stearate may be added to a polypropylene resin composition for the purpose of improving heat stability and the dispersibility of a pigment or an ultraviolet absorber and the like in molten polypropylene.

Japanese Patent Application Laid-open No. 138652/1986 has suggested that calcium stearate and zinc

stearate are used together to improve the dispersibility of the pigment and weld strength. However, the addition of a large amount of calcium stearate noticeably reduces stiffness and heat resistance of the resin composition, and hence the practical upper limit of the calcium stearate content is usually about 0.2% by weight. When about 0.2% by weight of calcium stearate was added, melt index scarcely changed.

In Japanese Patent Application Laid-open No. 138652/1986, it is described that when calcium stearate and zinc stearate are each added in an amount of 0.6 part by weight with respect to 100 parts by weight of the polypropylene, a migration phenomenon is observed.

In Japanese Patent Application Laid-open No.300247/1990, a resin composition comprising a polypropylene of a low melt index, an inorganic filler and sodium stearate is disclosed as a comparative example, but this resin composition does not attain a melt index level (15 g/10 min or more) which permits a reduction of the wall thickness intended by the present invention. Hence, it cannot be considered that the prior resin composition is a polypropylene resin composition having excellent fluidity.

There is known a method which comprises adding a hydrochloric acid auxiliary and a metallic soap such as calcium stearate or zinc stearate to a polyolefin such as the polypropylene for the purpose of improving destaticization, the dispersibility of a pigment or the like and fastness properties. On the other hand, the polypropylene itself is poor in light resistance (weathering resistance), and so a kind of light stabilizer is added. Of various kinds of light stabilizers, the hindered amine light stabilizer has been widely used (e.g., Japanese Patent Publication No. 16979/1985). The amine group is liable to react with the metallic soap, and at the time of the reaction, metal oxides, a free fatty acid and the like migrate onto the surface of a molded article, so that they soil the surface of a mold for injection molding. In addition, the migration phenomenon becomes conspicuous on the surface of the molded article while the molded article is used for a long time, and the appearance of the article is impaired. This tendency in the polypropylene is lower when calcium stearate is added than when zinc stearate is added, and therefore as the metallic soap for use in the polypropylene, calcium stearate is mainly utilized. In consequence, zinc stearate is not so often used, and even if employed, it has been used together with calcium stearate (e.g., Japanese Patent Application Laid-open No. 138652/1986).

Moreover, when the hindered amine light stabilizer is used together with a phenolic antioxidant, a problem such as color change toward pink or yellow occurs on occasion.

The polypropylene is easily oxidized and decomposed by heat, and when decomposed, the problem of color change takes place sometimes. Accordingly, most of the polypropylenes for use in injection molding contain various kinds of antioxidants. In general, phenolic, phosphoric and sulfuric antioxidants are suitably used, whereby the oxidation and decomposition can be prevented at the time of granulation and injection molding, and the oxidation can also be prevented when the polypropylene is used at a high temperature. If the granulation is done in an insufficient amount of the antioxidant, some of the polypropylene is thermally decomposed, so that its molecular weight decreases, with the result that impact resistance deteriorates.

As examples of a resin such as the polypropylene to which a compound where the hydrogen atoms of an amine group of the hindered amine is replaced with an alkyl group is added, there are a method for improving water resistance by methylating the hindered amine (Japanese Patent Application Laid-open No. 62651/1984), a method for improving the weathering resistance of a polyolefin fiber (e.g., Japanese Patent Application Laid-open No. 136533/1986), a polypropylene resin composition stable to radiation (e.g., Japanese Patent Application Laid-open No. 235345/1987), a method for improving the weathering resistance of a resin composition (e.g., Japanese Patent Application Laid-open No. 291957/1988), and a resin composition suitable for a plasma treatment (e.g., Japanese Patent Application Laid-open No. 33426/1988). In these patents, no inorganic filler and/or metallic soap is present in the system, and so they do not suggest a technique for overcoming adverse influences caused by a reaction of the metallic soap with the hindered amine or a reaction of the phenolic antioxidant with the hindered amine which is one problem to be solved by the present invention.

Japanese Patent Application Laid-open No. 36633/1989 describes that for the purpose of preventing the weathering resistance from deteriorating when the phenolic antioxidant and the sulfuric antioxidant are both used, the phenolic antioxidant, the sulfuric antioxidant and the metallic soap are added to a polyolefin resin filled with an inorganic filler, but this disclosed technique does not intend to solve the problem which the present invention can solve, i.e., the problem of color change which occurs in the case where the hindered amine light stabilizer and the phenolic antioxidant are both used.

In addition, the disclosed publication does not refer to a problem caused by a reaction of the hindered amine light stabilizer and a metallic soap such as zinc stearate in the case that the metallic soap is added, and therefore the publication does not intend to solve one of the problems which the present invention can solve, i.e., a bad influence caused by a reaction of the metallic soap and the hindered amine, or a reaction of the phenolic antioxidant and the hindered amine.

Moreover, a modified polypropylene grafted with an unsaturated carboxylic acid or its derivative has been used as a component for an adhesive comprising the polypropylene and a vinyl alcohol ethylene copolymer

(e.g., Japanese Patent Application Laid-open Nos. 39678/1974 and 09546/1974, and U.S. Patent No. 4,983,435). However, when used as a modifier for a resin composition containing a filler, a large amount of the modified polypropylene is necessary, and usually in the case of the modified polypropylene in which about 10% of the unsaturated carboxylic acid is grafted, 0.5 to 5.0 parts by weight of the modified polypropylene is required to be added to 100 parts by weight of the polypropylene resin composition containing a glass fiber.

The present invention provides a polypropylene resin composition in which the deterioration of physical properties such as impact strength, stiffness and heat resistance is such as to be practically acceptable and fluidity is improved and which is suitable for the preparation of molded articles having a small wall thickness and inhibits color change toward yellow or pink by pelletizing, soil on the surface of a mold and a migration phenomenon on the surfaces of injected articles.

The present inventors have intensively researched with the intention of solving the above problems, and as a result, the present invention has been attained.

That is to say, the first aspect of the present invention is directed to a polypropylene resin composition having an improved melt index which comprises 100 parts by weight of a polypropylene, 2 to 100 parts by weight of an inorganic filler, and 0.2 to 2.0 parts by weight of a metallic soap of a fatty acid having 15 to 20 carbon atoms and zinc.

The second aspect of the present invention is directed to a polypropylene resin composition having a melt index 1.2 times or more as much as that of a polypropylene resin composition in which zinc stearate is replaced with the same amount of calcium stearate, said polypropylene resin composition being characterized in that the polypropylene is a block copolymer obtained by copolymerizing propylene and ethylene (which is called in the present specification a copolymerization part) after the polymerization of propylene (which is called in the present specificationa homopolymerization part); the polypropylene resin composition contains a copolymerization part A in which a [$\eta$] of the copolymerization part is in the range of from 2 to 6 (in the present invention, the [$\eta$] is a intrinsic viscosity number measured in a tetralin solution at 135°C) and a copolymerization part B having a [$\eta$] of 7 to 15; a weight ratio of A:B is in the range of from 0.1:0.9 to 0.9:0.1; and the polypropylene resin composition has a melt index 1.2 times or more as much as that of a polypropylene resin composition in which zinc stearate is replaced with the same amount of calcium stearate.

The third aspect of the present invention is directed to a polypropylene resin composition having a melt index of 15 g/10 min or more which comprises 100 parts by weight of a polypropylene, 2 to 100 parts by weight of an inorganic filler, 0.2 to 2.0 parts by weight of a metallic soap comprising zinc and a fatty acid having 15 to 20 carbon atoms, 0.1 to 0.5 part by weight of a phenolic antioxidant as an antioxidant, and 0.1 to 1.0 part by weight of a hindered amine light stabilizer in which all hydrogen atoms of amine groups are replaced with alkyl groups.

Preferred embodiments of the present invention will now be explained in more detail in the following non-limiting description.

A polypropylene for use in a polypropylene resin composition of the present invention is a polypropylene having a high crystallinity such as an isotactic polypropylene or a syndiotactic polypropylene, and examples of the polypropylene include a homopolypropylene, a crystalline propylene ethylene random copolymer, a crystalline propylene ethylene block copolymer and mixtures thereof. The present invention has an effect of improving the fluidity of the polypropylene, and particularly it is excellent in balance among the fluidity, impact strength and stiffness. Therefore, the propylene ethylene block copolymer is preferable.

The propylene ethylene block copolymer which can be used in the present invention is usually a block copolymer obtained by polymerizing a propylene (or also including a mixture of a propylene having an ethylene content of 1% by weight or less and ethylene), and then by feeding a mixed monomer of ethylene having an ethylene content of 30 to 95% by weight and propylene, and copolymerizing the mixed monomer to form a copolymerization part. Furthermore, a polymer obtained by polymerizing the above mixed monomer of the same composition to form the copolymerization part, and then polymerizing propylene is also acceptable.

In addition, there is also preferably used a material obtained by adding the propylenehomopolymer, ethylene propylene rubber or the like to the above propylene ethylene block copolymer, or a material obtained by adding a mixture of the propylene homopolymer and the ethylene propylene rubber to the above propylene ethylene block copolymer.

Particularly in the present invention, there can be preferably used the polypropylene which is a block copolymer comprising a propylene homopolymerization part and a copolymerization part obtained by copolymerizing propylene and ethylene after the polymerization of propylene, the above polypropylene resin composition containing a copolymerization part A in which a [$\eta$] of the copolymerization part is in the range of from 2 to 6 and a copolymerization part B having a [$\eta$] of 7 to 15, and having a weight ratio of A:B in the range of from 0.1:0.9 to 0.9:0.1. In the case that this kind of polypropylene is used, the polypropylene resin composition can be preferably obtained which has a melt index 1.2 times or more as much as that of a polypropylene resin composition in which zinc stearate is replaced with the same amount of calcium stearate.

The polypropylene which is a block copolymer comprising a homopolymerization part and a copolymerization part obtained by copolymerizing propylene and ethylene after the polymerization of propylene, the above polypropylene resin composition containing a copolymerization part A in which the [η] of the copolymerization part of propylene and ethylene is in the range of from 2 to 6 and a copolymerization part B having a [η] of 7 to 15, and having a weight ratio of A:B in the range of from 0.1:0.9 to 0.9:0.1" means that the resin composition of the present invention contains a copolymerization part A in which the [η] of the copolymerization part is in the range of from 2 to 6 and a copolymerization part B having a [η] of 7 to 15 in a weight ratio of A:B in the range of from 0.1:0.9 to 0.9:0.1, and hence the parts A and B may be prepared by the copolymerization or may be blended with the resin composition to introduce them into the composition.

More concretely, the polypropylene is the block copolymer comprising the homopolymerization part and the copolymerization part obtained by copolymerizing propylene and ethylene after the polymerization of propylene. This block copolymer is a multi-stage polymer containing the copolymerization part A in which the [η] of the copolymerization part of propylene and ethylene is in the range of from 2 to 6 and the copolymerization part B having a [η] of 7 to 15, and having the weight ratio of A:B in the range of from 0.1:0.9 to 0.9:0.1.

The ratio (by weight%) of ethylene in the propylene ethylene copolymerization part is in the range of from 30 to 95%, preferably 30 to 80%, more preferably 40 to 70%. In this copolymerization part, polymers which are usually produced are nonuniform, and they are mainly a rubber-like ethylene propylene random copolymer containing about 40% by weight of ethylene, an ethylene propylene copolymer similar to the polyethylene and a crystalline propylene ethylene copolymer having a composition similar to the polypropylene.

With regard to a ratio between the homopolymerization part and the copolymerization part in the propylene ethylene block copolymer which can be used in the present invention, the propylene homo-polymerization part in the propylene ethylene block copolymer is in the range of from 95 to 75% by weight, preferably 90 to 78% by weight, more preferably 85 to 78% by weight.

The average [η] of the homopolymerization part in the above propylene ethylene block copolymer is in the range of from 0.7 to 1.6, preferably from 0.8 to 1.5. Furthermore, in order to improve the fluidity of the polypropylene, there is used the propylene ethylene block copolymer in which the [η] of the homopolymerization part comprises at least two kinds of a high [η]H portion and a low [η]L portion, and the ratio of the high [η]H portion to the low [η]L portion is preferably in the range of from 1.1 to 2.0, more preferably from 1.3 to 1.8. Concretely, two or more kinds of propylene ethylene block copolymers having the high [η] homopolymerization part and the low [η] homopolymerization part may be used. Alternatively, the homopolymerization part of the propylene ethylene block copolymer may be polymerized in a multi-stage state to change the [η] of the produced polypropylene, and the propylene ethylene block copolymer having the thus formed homopolymerization part may be used. Furthermore, the propylene ethylene block copolymer may be mixed with a propylene homopolymer having a [η] which is different from the [η] of the homopolymerization part of this block copolymer to obtain the above [η] constitution.

If the average [η] of the homopolymerization part is less than 0.7, a balance among an Izod impact strength at an ordinary temperature, a low brittle temperature, a tensile elongation at break and a melt index noticeably deteriorates on occasion.

If the average [η] of the homopolymerization part is than 1.6 or more, in order to obtain the propylene ethylene block copolymer having the high melt index, the ratio of the copolymerization part having the average [η] in the range of from 7 to 15 must be 10 wt.% or less of the copolymerization part sometimes. In this case, the low brittle temperature is unsuitable. Furthermore, another method for obtaining the propylene ethylene block copolymer having the high melt index in which the average [η] of the homopolymerization part is 1.6 or more can also be carried out by decreasing the amount of the copolymerization part, but in this case, the Izod impact strength at the ordinary temperature, the low brittle temperature and a surface impact strength are poor.

If 10% by weight of more of the propylene ethylene block copolymer in which the [η] of the homopolymerization part is in the range of 1.2 to 2.0 is added to the propylene ethylene block copolymer in which the [η] of the homopolymerization part is in the range of 0.7 to 1.0, this composition is preferably excellent in the fluidity, the Izod impact strength at the ordinary temperature and the low brittle temperature. Even if the propylene ethylene block copolymer in which the [η] of the homopolymerization part is less than 1.2 is added, the Izod impact strength at the ordinary temperature is not sufficiently improved. On the other hand, if the propylene ethylene block copolymer in which the [η] of the homopolymerization part is more than 2.0 is added, in order to maintain the whole melt index at a high level, the amount of the copolymerization part is required to be decreased, so that the product having the poor Izod impact strength at the ordinary temperature and the unsuitable low brittle temperature is merely obtained. Furthermore, in order to maintain the whole melt index at the high level, it is difficult on occasion to mix the propylene ethylene block copolymer in which the [η] of the homopolymerization part is high.

If a mixing ratio of the propylene ethylene block copolymer in which the [η] of the homopolymerization part is in the range of from 1.2 to 2.0 is less than 10% by weight, the improvement effect of the Izod impact strength at the ordinary temperature and the low brittle temperature are insufficient.

The propylene ethylene block copolymer to be added in which the [η] of the homopolymerization part is in the range of from 1.2 to 2.0 may be the propylene ethylene block copolymer in which the [η] of the copolymerization part is in the range of from 2 to 6 or the propylene ethylene block copolymer in which it is in the range of from 7 to 15.

Furthermore, by spreading the molecular weight distribution (Mw/Mn) of the homopolymerization part, and heightening the stereo regularity or the crystallinity of homopolymerization part, the balance among the stiffness and the impact strength of the polypropylene resin composition of the present invention can be improved.

The propylene ethylene block copolymer which can be used in the present invention can be obtained by a known usual manufacturing method. Examples of the polymerization method include a solvent polymerization method, a bulk polymerization method and a gaseous phase polymerization method, and a batch system and a continuous system are applicable.

A catalyst for the polymerization which can be used in the present invention is a known catalyst comprising a titanium catalyst component such as titanium tetrachloride supported on magnesium chloride treated with an electron donating compound, titanium trichloride, activated titanium trichloride and an organic aluminum compound and optionaly adding an electron donating compound.

Furthermore, a catalyst comprising a metallocene compound and an aluminoxane can also be used.

The propylene ethylene block copolymer which can be preferably used in the present invention can be obtained by first polymerizing propylene or propylene mixed with 1% by weight or less of ethylene, and then feeding a mixed monomer of ethylene having an ethylene content of 30 to 95% by weight and propylene and carrying out the copolymerization.

If necessary, in the course of the above (co)polymerization, hydrogen is added to the homopolymerization and the copolymerization to adjust the molecular weight of the produced polymer. At this time, the polymerization is carried out under the control of the hydrogen amount so that the propylene ethylene block copolymer may have the constitution [η] of the present invention.

If necessary, the copolymerization can be carried out so as to form the copolymerization part by changing a hydrogen concentration in a multi-stage state, and if necessary, for the homopolymerization part, the polymerization may be carried out in multiple stages in which the hydrogen amounts are different.

In particular, when the polymerization is carried out by the use of a polymerization catalyst comprising an organic aluminum compound, an electron donating compound such as an ester compound and the so-called Solvay catalyst obtained by activating, with an ether compound and titanium tetrachloride, titanium trichloride obtained by reducing titanium tetrachloride with an organic aluminum compound, the propylene ethylene block copolymer is formed, and it has the homopolymerization part in which a molecular weight distribution (Mw/Mn) is in the range of from 8 to 12 and a isotactic pentad fraction ratio [mmmm] is in the range of from 0.97 to 0.99. This block copolymer does not have drawbacks such as the insufficient filling of the resin and the prolongation of a molding cycle due to the extension of a plasticizing time which take place at a time when the propylene ethylene block copolymer having the usual homopolymerization part with the high steric regularity is molded, and hence, this block copolymer is optimum as a material for the injection molding, because a molded article has a suitable stiffness.

In addition, when the polymerization is carried out by the use of a catalyst comprising an organic aluminum compound, an alkoxysilane compound and the so-called carrier catalyst component obtained by supporting titanium tetrachloride on magnesium chloride, the propylene ethylene block copolymer is formed, and it has the propylene homo-polymerization part in which a molecular weight distribution (Mw/Mn) is in the range of from 4 to 7, preferably 4.5 to 6.5 and the isotactic pentad fraction ratio [mmmm] is in the range of from 0.97 to 0.99. This propylene ethylene block copolymer is optimum as the molding material which requires the impact strength, because its molded article is excellent in the tensile elongation at break, the Izod impact strength and the fluidity. This propylene ethylene block copolymer has a very high crystallization velocity, and therefore it has a drawback that the poor filling easily occur as the injection molding material for a molded article having thin ribs, but by adding a rubber component, a disadvantage such as the poor filling can be overcome.

The melt index of the polypropylene resin composition of the present invention is in the range of from 15 to 100 g/10 min, preferably from 20 to 100, more preferably from 25 to 100. If the melt index is less than 15 g/10 min, the polypropylene resin composition has the bad fluidity and hence, it is not suitable for the molding of articles having a small wall thickness. Conversely, if the melt index is in excess of 100 g/10 min, the impact resistance is low, and at the time of the injection molding, burrs are formed inconveniently.

When a metallic soap usable in the present invention is added, the polypropylene resin composition of the present invention, in which the above specific propylene ethylene block copolymer is used, has the melt index

1.2 times to twice, preferably 1.3 times to twice as much as that of a composition in which an equal amount of calcium stearate is added. Furthermore, if the suitable resin is selected, the melt index can increase even 1.4 times to twice. In addition, the resin composition of the present invention has a large spiral flow length, is free from the poor filling of the resin at the time of the injection molding, and has a large improvement effect that twist and deformation due to the remaining stress of the injected articles scarcely take place.

Moreover, the polypropylene resin composition of the present invention is a polypropylene resin composition having a melt index of 15 g/10 min or more which comprises 100 parts by weight of a polypropylene, 2 to 100 parts by weight of an inorganic filler, 0.2 to 2.0 parts by weight of a metallic soap comprising zinc and a fatty acid having 15 to 20 carbon atoms, 0.1 to 0.5 part by weight of a phenolic antioxidant as an antioxidant, and 0.1 to 1.0 part by weight of a hindered amine light stabilizer in which all hydrogen atoms of amine groups are replaced with alkyl groups.

According to an embodiment of the present invention, physical properties such as the impact strength, the stiffness and the heat resistance scarcely deteriorate, and the fluidity can be improved by adding the specific metallic soap, the phenolic antioxidant as the antioxidant and the hindered amine light stabilizer in which all hydrogen atoms of the amine groups are replaced with the alkyl groups to the polypropylene resin composition comprising the polypropylene having the specific melt index or more and the inorganic filler.

The polypropylene resin composition of the present invention most suitably contains 2 to 100 parts by weight, preferably 10 to 70 parts by weight, particularly preferably 10 to 30 parts by weight of the inorganic filler with respect to 100 parts by weight of the polypropylene. If the content of the inorganic filler is less than 2 parts by weight, the fluidity is not sufficiently improved, even if a small amount of the metallic soap is added. If the metallic soap is added in large quantities, the fluidity can be improved, but physical properties such as the impact strength, the stiffness and the heat resistance deteriorate. With regard to the polypropylene resin composition with which 100 parts by weight or more of the filler is blended, its fluidity can scarcely be improved, even if the metallic soap is added, and the effect is not observed.

The fluidity improvement effect of the polypropylene resin composition of the present invention does not deteriorate, even if containing a resin other than the propylene or an elastomer. In particular, when the elastomer is added to the polypropylene in a suitable ratio of 0 to 30 parts by weight, the impact strength can be preferably improved. Examples of the elastomer include ethylene propylene copolymer elastomer (EPM), ethylene propylene diene copolymer elastomer (EPDM), ethylene butene-l copolymer elastomer (EBM), ethylene octene-1 copolymer elastomer (EOM), ethylene hexene-l copolymer elastomer (EHM), ultra-low density polyethylene, styrene butadiene block copolymer elastomer, styrene butadiene random copolymer elastomer and styrene isoprene block copolymer elastomer.

The inorganic filler which can be used in the present invention includes one or more of silica, alumina fiber, titanium oxide, iron oxide, zinc oxide, magnesium oxide, tin oxide, antimony oxide, barium ferrite, strontium ferrite, aluminum hydroxide, magnesium hydroxide, calcium carbonate, calcium sulfate, barium sulfate, talc, clay, mica, calcium silicate, glass fiber, calcium titanate, lead zirconate titanate, aluminum nitride, silicon carbide and cadmium sulfide. In particular, the employment of talc in the resin composition is preferable, because in such a case, the smoothness of the molded article is excellent and the fluidity improvement effect is most excellent, and a difference between shrinkage ratios in a direction at right angles to and in parallel with the injecting direction of the article obtained by the injection molding is slight. In addition, the most preferable inorganic filler which can be used in the present invention has a specific surface area of 0.5 to 20 m2/g. If the specific surface area is less than 0.5 m2/g, a particle diameter is too large, and the impact strength and the tensile elongation at break of the molded article deteriorate, and the metallic soap migrates, which impairs the appearance of the product on occasion. Furthermore, if a filler having more than 20 m2/g such as carbon black is used, the metallic soap excessively adheres onto the surface of the filler, so that the effects of the fluidity of the metallic soap and the improvement of mechanical physical properties cannot be confirmed.

In addition, with regard to the molded article obtained by using the inorganic filler which comprises 95 to 60% by weight of talc and 5 to 40% by weight of a fibrous magnesium sulfate whisker( $MgSO_4 \cdot 8H_2O$), a difference between shrinkage ratios in a right angled direction (MD direction) and a parallel direction (TD direction) is slight, and a balance between flexural modulus and impact strength is preferably particularly excellent. The molded article obtained by using the most suitable talc having an average particle diameter of 2 fm or less, particularly preferably 1 fm is excellent in a balance between the stiffness and the impact strength. In particular, the talc obtained from a raw ore in the northern part of China contains less impurities, and when this kind of talc is used, the product having the excellent balance between the stiffness and the impact strength can be obtained. Furthermore, the talc whose surface has been treated with a silazane is preferable as the inorganic filler.

The metallic soap which can be used in the present invention is a metallic soap comprising zinc and a fatty acid having 15 to 20 carbon atoms. Examples of the fatty acid having 15 to 20 carbon atoms include pentadecanoic acid, hexadecanoic acid, palmitic acid, octadecanoic acid, stearic acid, nonadecanoic acid, icosaic acid and oleic acid. If the metallic soap of the fatty acid having less than 15 carbon atoms is used, the impact strength, the stiffness and the heat resistance are poor, and conversely, if the metallic soap of the fatty acid having more than 20 carbon atoms is used, the fluidity improvement effect is not sufficient. In particular, the molded article obtained by the use of zinc stearate is most excellent in the balance among the impact strength, the stiffness, the heat resistance and the fluidity, and even when a small amount of zinc stearate is added, the fluidity improvement effect of the resin composition is preferably large.

The amount of the metallic soap comprising the fatty acid and zinc for use in the present invention is in the range of from 0.2 to 2.0 parts by weight, preferably from 0.2 to 1.0 part by weight, more preferably from 0.3 to 0.7 part by weight with respect to 100 parts by weight of the polypropylene. If the amount of the metallic soap is less than 0.2 part by weight, the improvement effect of physical properties such as the fluidity of the resin composition cannot be sufficiently obtained. Conversely, if the amount of the metallic soap is in excess of 2.0 parts by weight, the metallic soap migrates on the surface of the molded article, and the heat resistance and the impact strength of the resin deteriorate.

A phenolic antioxidant as an antioxidant may be added to the resin composition of the present invention. When the phenolic antioxidant is used, the fluidity of the resin composition can be improved without causing the decomposition of the polypropylene. The usual phosphoric and sulfuric antioxidants impede the fluidity improvement effect in the case that the metallic soap comprising the fatty acid and zinc is added. No particular restriction is put on the kind of phenolic antioxidant, and the commercially available phenolic antioxidant can be used. The amount of the phenolic antioxidant to be used is in the range of from 0.05 to 0.5 part, preferably 0.07 to 0.3 part with respect to 100 parts by weight of the polypropylene.

Examples of the phenolic antioxidant include 2,6-di-t-butylphenol, 2,4-di-t-butylphenol, 2-t-butyl-4-methoxyphenol, 2-t-butyl-4,6-dimethylphenol, 2,6-t-butyl-4-methylphenol, 2,6-t-butyl-4-ethylphenol, 2,4,6-tri-t-butylphenol, 2,6-t-butyl-4-hydroxymethylphenol, 2,6-di-t-butyl-2-dimethylamino-p-cresol, 2,5-di-t-butylhydroquinone, 2,5-di-t-amylhydroquinone, 3-(3',5'-di-t-butyl-4'-hydroxyphenyl)-propionic acid n-octadecyl, 2,4-bis-(n-octylthio)-6-(4-hydroxy-3,5-di-t-butylanilino)-1,3,5-triazine, styrenate phenol, Noclizer SCM (trade name) made by Ouchi Shinkosha Co., Ltd., (formula (1)) Vitamin E Eisai (trade name) made by Eisai Co., Ltd., (formula (2))

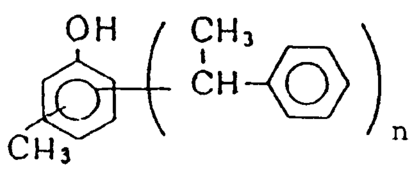

Formula (1)

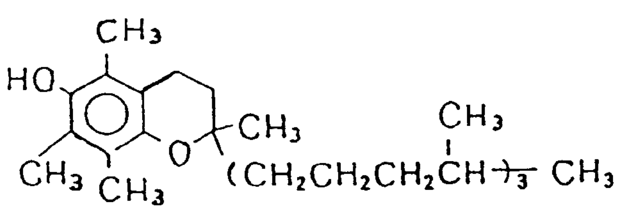

Formula (2)

2-t-butyl-6-(3'-t-butyl-5'-methyl-2'-hydroxybenzyl)-4-methylphenyl acrylate, 2,2'-methylenebis-(4-ethyl-6-t-butylphenol), 2,2'-methylenebis-(4-ethyl-6-t-butylphenol), 2,2'-methylenebis-(6-cyclohexyl-4-methylphenol), 2,2'-methylenebis-(6-methylcyclohexyl-p-cresol), 2,2'-ethylenebis-(2,4-di-6-t-butylphenol), 2,2'-butylenebis-(2-t-butyl-4-methylphenol), 4,4'-methylenebis-(2,6-di-t-butylphenol), 4,4'-butylenebis-(3-methyl-6-t-butylphenol), 1,6-hexanediolbis-[3-(3,5-di-t-butyl-(4-hydroxyphenyl)-propionate), triethylene glycolbis-[3-(3-t-butyl-5-methyl-4-hydroxyphenyl)-propionate], N,N'-bis-[3-(3,5-di-t-butyl-4-hydroxyphenyl)-propionyl]hydrazine, N,N'-bis-3-(3',5')-di-t-butyl-4-hydroxyphenyl)-propionyl-hexamethylenediamine, 2,2-thiobis-(4-methyl-6-t-butylphenol), 4,4'-thiobis-(3-methyl-6-t-butylphenol), 2,2-thiodiethylenebis-[3-(3,5-di-t-butyl-4-hydroxyphenol) propionate, bis[2-t-butyl-4-methyl-6-(3-t-butyl-5-methyl-2-hydroxybenzyl)phenyl] terephthalate, 1,1,3-tris-(2-methyl-4-hydroxy-5-t-butylphenylbutane, 1,3,5-trimethyl-2,4,6-tris-(3,5-di-t-butyl-4-hydroxybenzyl)-benzene, tris(3,5-di-t-butyl-4-hydroxybenzyl)-isocyanurate, tris[2-(3',5'-di-t-butyl-4'-hydroxyhydro-cinnamoyloxylethyl)-isocyanurate, tris[4-t-butyl-2,6-di-methyl-3-hydroxybenzyl)-isocyanurate, tetrakis-[methylene-3-(3',5'-di-t-butyl-4'-hydroxyphenyl) propionate]-methane, propyl-3,4,5-trihydroxybenzene carbonate, octyl-3,4,5-trihydroxybenzene carbonate, dodecyl-3,4,5-trihydroxybenzene carbonate, 2,2'-methylenebis-(4-m-ethyl-6-t-butylphenol), 4,4-methylenebis-(2,6-di-t-butylphenol), 1,1-bis-(4-hydroxyphenyl)-cyclohexane, 1,1,3-tris-(2-methyl-4-hydroxy-5-t-butylphenyl)butane, 1,1,3-tris-(2-methyl-4-hydroxy-5-t-butylphenyl)-3-methylbutane, 1,3,5-trimethyl-2,4,6-tris-(3,5-di-t-butyl-4-hydroxybenzyl)benzene and 3,9-bis-[1,1-di-methyl-2-{β-(3-t-butyl-4-hydroxy-5-methylphenyl)propionyloxy}ethyl]-2,4,8,10-tetraoxaspiro-[5,5]undecane.

Preferably, for the purpose of enhancing light resistance and weathering resistance, a hindered amine light stabilizer in which the hydrogen atoms of an amine group are replaced with alkyl groups may be added to the resin composition of the present invention. If the light stabilizer in which the hydrogen atoms are not substituted is used, the metallic soap reacts with this hindered amine light stabilizer, so that metal oxides and the free fatty acid migrate on the surface of the molded article, and they soil the surface of a mold and impair the appearance of the molded article. When the hindered amine light stabilizer is used together with the phenolic antioxidant, impurities in these agents react with each other, so that the color of the molded article changes toward yellow, pink or the like sometimes. In the hindered amine light stabilizer which can be used in the present invention, the alkyl groups may be partially replaced with a carbonyl group or an ester group. When a condensation reaction of these functional groups occurs to increase the molecular weight of the resin, a migration phenomenon on the surface of the molded article is inhibited while the molded article is used for a long period of time, and when an inthroughment panel for a car is molded from the resin composition having the increased molecular weight, volatile components which cloud a glass or an acrylic resin of a meter cover are preferably inhibited from being produced. No particular restriction is put on the kind of hindered amine light stabilizer in which the hydrogen atoms of the amine group are replaced with the alkyl groups, but examples of the hindered amine light stabilizer include trade name Adekastab LA-52 (made by Asahi Denka Kogyo K.K.), (formula (3)) trade name Adekastab LA-62 (made by Asahi Denka Kogyo K.K.), (formula (4)) trade name Adekastab LA-63 (made by Asahi Denka Kogyo K.K.), (formula (5)) trade name Adekastab LA-82 (made by Asahi Denka Kogyo K.K.), (formula (6)) trade name Sandoluba 3058 (made by Sandoz, Inc.) (formula (7)) and trade name Sandoluba 3056 (made by Sandoz, Inc.) (formula (8)).

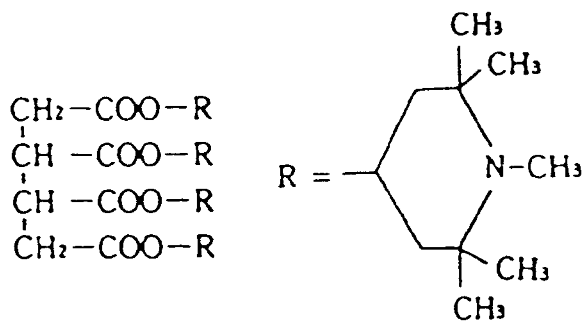

Formula (3)

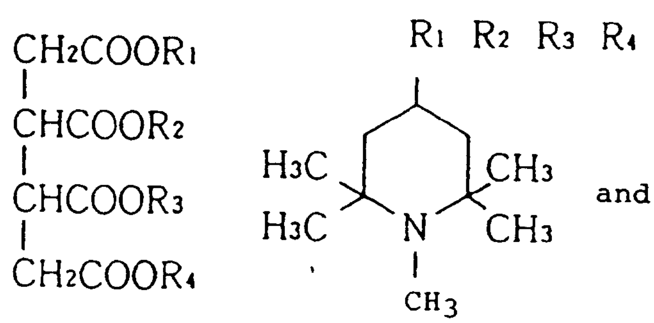

and $-C_{13}H_{27}$

Formula (4)

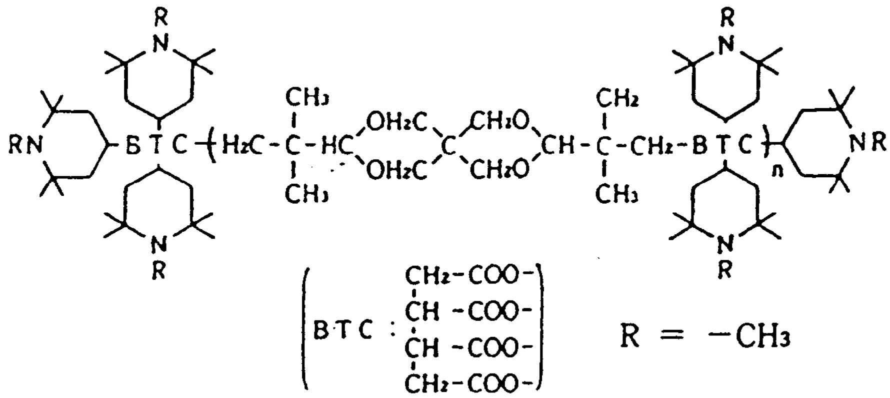

Formula (5)

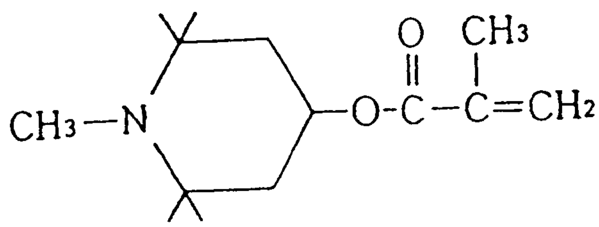

Formula (6)

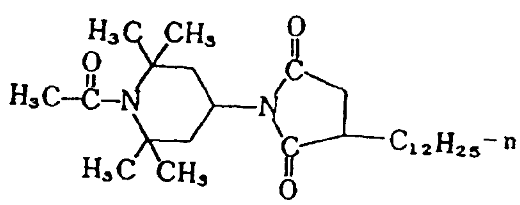

Formula (7)

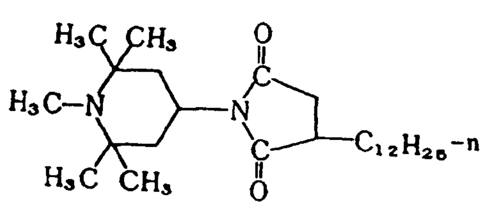

Formula (8)

The amount of the hindered amine light stabilizer which can be used in the present invention is in the range of from 0.1 to 1 part by weight, preferably from 0.15 to 0.5 part by weight with respect to 100 parts by weight of the polypropylene.

If necessary, other additives may be added to the resin composition of the present invention. Examples of the additives include dispersants for fillers, ultraviolet absorbents, antistatic agents, pigments, dyes, crystallization accelerators, copper harm inhibitors, lubricants, flame retardants and plasticizers.

Particularly in the present invention, when an ester of glycerin and a higher fatty acid is used together with the metallic soap, the impact strength of the resin composition can be improved without any deterioration of the flexural modulus. Examples of the ester of the higher fatty acid having from 15 to 20 carbon atoms and glycerin include monoesters, diesters and triesters of glycerin and fatty acids such as pentadecanoic acid, hexadecanoic acid, palmitic acid, octadecanoic acid, stearic acid, nonadecanoic acid, icosaic acid and oleic acid, and above all, a glycerin monostearate is particularly preferable.

The amount of the ester of glycerin and the higher fatty acid is in the range of from 0.2 to 1 part by weight, particularly preferably from 0.2 to 0.7 part by weight with respect to 100 parts by weight of the polypropylene. If the amount of the ester is more than 1 part by weight, the prepared resin composition is hygroscopic, so that a trouble occurs at the time of the injection molding, and the heat resistance and the stiffness deteriorate noticeably. If the amount of the ester of glycerin and the higher fatty acid is less than 0.2 part by weight, the improvement effect of the impact strength is poor.

When a modified polypropylene obtained by grafting an unsaturated carboxylic acid or its derivative is added to the resin composition of the present invention in an amount of 0.001 to 0.3 part by weight, preferably from 0.01 to 0.1 part by weight with respect to 100 parts by weight of the polypropylene, the tensile elongation at break and the flexural modulus can be improved. If the amount of the modified polypropylene is less than 0.001 part by weight, the tensile elongation at break and the flexural modulus cannot be improved, and if it is more than 0.3 part by weight, the fluidity of the resin composition deteriorates.

The surfaces of the inorganic fillers are preferably treated with of the modified polypropylene obtained by grafting an unsaturated carboxylic acid or its derivative. The surface treatment of the inorganic fillers with the modified polypropylene means that the inorganic fillers are brought into contact with the modified polypropylene, and they can be treated by mixing both the materials in a Henschel mixer or the like.

Examples of the unsaturated carboxylic acid or its derivative for use in the preparation of the modified polypropylene include acrylic acid, methacrylic acid, maleic acid, fumaric acid, itaconic acid, maleic anhydride, citraconic anhydride, itaconic anhydride, methyl acrylate, methyl methacrylate, ethyl methacrylate, glycidyl acrylate, diethyl maleate, monomethyl fumarate, diethyl itaconate, acrylic amide, maleic monoamide, maleic diamide, maleic acid-N-monoethylamide, maleic acid-N,N-diethylamide, maleic acid-N-monobutylamide, maleic acid-N-monobutylamide, maleic acid-N,N-dibutylamide, fumaric diamide, fumaric acid-N-monoethylamide, fumaric acid-N,N-diethylamide, fumaric acid-N-monobutylamide, fumaric acid-N-monobutylamide, fumaric acid-N,N-dibutylamide, maleimide, N-butylmaleimide, N-phenylmaleimide, sodium acrylate and potassium acrylate. The modified polypropylene can be obtained by bringing the unsaturated carboxylic acid or its derivative into contact with the polypropylene in a solvent, or bringing the unsaturated carboxylic acid or its derivative into contact with the polypropylene in a melting state at a high temperature in an extruder or a kneader to carry out graft copolymerization. The modified polypropylene can be added together with the polypropylene, the inorganic filler and the additives at one time, but more preferably, the modified polypropylene is beforehand mixed with the inorganic filler, and then added.

In particular, the modified polypropylene may be dissolved in a suitable solvent, and the resultant solution, emulsion or suspension may be then mixed with the inorganic filler. Afterward, the solvent may be removed by a suitable means. In this case, the obtained polypropylene resin composition of the present invention is excellent in the tensile elongation at break.

The polypropylene resin composition of the present invention can be prepared by mixing the polypropylene, the inorganic filler, the metallic soap, if necessary, the phenolic antioxidant, the hindered amine light stabilizer and the like by a ribbon blender, a Henschel mixer or the like, and then melting and kneading the mixture by a Bambury mixer, a hot roll, an extruder, a Ko-kneader or the like to obtain pellets. Afterward, the resin pellets can be molded by the injection molding or the like. Alternatively, a master batch containing the phenolic antioxidant, the hindered amine light stabilizer and 5 to 30% by weight of the metallic soap may be first prepared, and the thus prepared master batch may be then subjected to the injection molding, while mixed with a suitable amount of the usual pellets.

In a polypropylene resin composition of the present invention, a metallic soap of zinc is used as a metallic soap, and thus the fluidity of the polypropylene resin composition is higher than when calcium stearate which is usually used as the additive for the polypropylene is utilized. The employment of the zinc metallic soap does not bring about the deterioration of stiffness and heat resistance in contrast to a method for improving the fluidity by lowering the molecular weight of the resin. In addition, when the metallic soap of zinc is used, Izod impact strength at ordinary temperature and low brittle temperature are both improved. In consequence, in the polypropylene resin composition of the present invention, the stiffness, the impact resistance and the heat resistance scarcely deteriorate, even when the wall thickness of the molded articles is reduced. Therefore, the polypropylene resin composition of the present invention makes it possible to reduce the wall thickness of exterior materials and interior materials of cars, which leads to the decrease of material costs, the curtailment of a molding cycle and the weight reduction of the product. As an additive for the polypropylene, an antioxidant is usually added, but when the phenolic antioxidant is used, the fluidity improvement effect of the present invention can be obtained. However, when a phosphoric antioxidant is used, the fluidity cannot be improved. Furthermore, for the purpose of giving weathering resistance to the polypropylene, a hindered amine light stabilizer is added, but there is a problem that this light stabilizer as an impurity reacts with the phenolic antioxidant as another impurity to change the color of the product to yellow or pink. In order to solve this problem, the hindered amine light stabilizer in which an amine group is substituted by an alkyl group can be used as the light stabilizer to solve the above problem.

Moreover, also in order to prevent the formation of a migrate which is a reaction product of the metallic soap and the hindered amine which can be used in the present invention, the hindered amine light stabilizer in which an amine group is substituted by an alkyl group is necessary. The employment of this kind of hindered amine light stabilizer can completely solve some problems which rise in improving the fluidity by the use of a usual hindered amine light stabilizer and the metallic soap, so that the polypropylene composition which is free from these problems can be obtained.

Next, the present invention will be described in more detail with reference to examples, but the scope of the present invention should not be limited by these examples.

Procedures for the evaluation of resin compositions will be described as follows.

(1) A melt index was measured in accordance with the ASTM D-1238 method.

(2) Flexural modulus was measured in accordance with the ASTM D-790 method (flexural velocity = 2 mm/min).

(3) Tensile elongation at break was measured in accordance with the ASTM D-638-90 method (tensile velocity = 10 mm/min).

(4) Heat distortion temperature was measured in accordance with the ASTM D-648 method (load = 18.6 kg/cm2).

(5) As Izod impact strength, Izod impact strength at 23°C was measured in accordance with the ASTM D-256 method.

(6) Color change properties were evaluated as follows. 3 parts by weight of a pigment master batch was added to 100 parts by weight of a material, and a tensile test piece having a length of 221 mm, a width of 19 mm and a thickness of 3 mm was then molded by injection molding. Afterward, the injection molding was repeated by the use of a virgin material until its color completely disappeared. The color change properties were represented by the number of the injection molding operation.

(7) Cold brittle temperature was measured by the use of a test piece having a thickness of 2 mm, a width of 6 mm and a length of 40 mm.

(8) Floating properties were measured by storing a molded article at room temperature for 3 months, and then observing the surface of the molded article.

(9) The average grain diameter of an inorganic filler was measured in accordance with a light transmission type grain measurement by the use of SKC-2000 made by Seishin Kigyo Co., Ltd.

(10) Mw/Mn was measured 135°C 0.2% - 1,2,4-trichlorobenzene solution using as polystyrene standard by waters GPC 150CX.

Examples 1 to 4

Examples of a polymerization method under conditions of PP-1 shown in Table 1 will be described.

Preparation process of propylene ethylene block copolymer (1)

100 liters of heptane was placed in a 250-liter SUS autoclave in a nitrogen atmosphere, and a polymerization system was purged with propylene. On the other hand, carrier catalyst component was prepared by magnesium chloride was ground with diethyl phthalate, and then the ground materials was thermally treated with titanium tetrachloride and then washed with heptane.

Afterward, a catalyst was prepared by mixing thus prepared carrier catalyst component, triethylaluminum and cyclohexylmethyldimethoxysilane in heptane. This catalyst was added to the autoclave, and polymerization was then carried out at a temperature of 75°C under a pressure of 5 kg/cm$^2$G. At this time, hydrogen was fed, and a hydrogen partial pressure was adjusted so that a produced polypropylene might have a [η] of about 1. As a result, a propylene homo-polymerization part was formed.

Next, the pressure in the autoclave was reduced by a vacuum pump to remove the remaining propylene and hydrogen, and polymerization was then carried out for 2 hours at a polymerization temperature of 55°C under a polymerization pressure of 2 kg/cm$^2$G. In this case, partial pressures of ethylene (EL), propylene (PL) and hydrogen in the gaseous phase was adjusted so that ethylene (EL)/propylene (PL) of a produced copolymer

in a copolymerization part might be 1 (wt) and the [η] might be about 9. In this polymerization, it was intended that a ratio of the polymer produced in the copolymerization part was about 15% by weight of the total polymer. The actual polymerization results of the PP-1 are shown in Table 1.

In a homopolymerization part at the above polymerization, polymerization was carried out, changing the hydrogen concentration, the EL/PL ratio and the hydrogen concentration in the copolymerization part to obtain block copolymers of PP-1 to PP-6 and PP-8.

Table- 1

| No. | copolymerization part | | | homopolymerization part | | MI of block copolymer |
|---|---|---|---|---|---|---|
| | amount | [η] | ratio of EL/PL | [η] | Mw/Mn | |
| unit | wt% | dl/g | wt | dl/g | | g/10min |
| PP 1 | 14.8 | 9.1 | 1.0 | 0.96 | 6 | 20 |
| PP 2 | 12.6 | 5.3 | 0.9 | 1.31 | 6 | 9.7 |
| PP 3 | 15.0 | 10.0 | 1.5 | 0.91 | 8 | 25 |
| PP 4 | 18.0 | 4.0 | 0.8 | 1.21 | 6 | 25 |
| PP 5 | 16.0 | 6.6 | 1.0 | 1.04 | 8 | 24 |
| PP 6 | 17.0 | 6.5 | 1.2 | 1.03 | 6 | 26 |
| PP 7 | 15.1 | 17.0 | 1.4 | 0.8 | 8 | 15 |
| PP 8 | 18.1 | 1.5 | 0.9 | 0.9 | 6 | 40 |

Preparation process of propylene ethylene block copolymer (2)

In PP-7, polymerization was carried out in accordance with the same procedure as in the above process except that a catalyst comprising the so-called Solvay catalyst component, diethylaluminum monochloride and methyl benzoate was used and a polymerization temperature in a propylene homo-polymerization part was set to 70°C. Incidentally, the Solvay catalyst component was prepared by activating, with isoamyl ether and titanium tetrachloride, titanium trichloride obtained reducing titanium tetrachloride with diethylaluminum monochloride.

45 parts by weight of each of the propylene ethylene block copolymers PP-1 and PP-2 having a copolymerization part composition and a homopolymerization part composition shown in Table 1 was mixed with 10 parts by weight of "LMS00" (made by Fuji Talc Co., Ltd.) as an inorganic filler, 0.05 part by weight of "Ionol" and 0.1 part by weight of "Irganox 1010" as heat stabilizers, and 0.3 part by weight, 0.5 part by weight, 1.0 part by weight and 1.5 parts by weight of zinc stearate were added to the mixture, respectively, and they were mixed by a Henschel mixer. Afterward, the mixture was extruded at 220°C under 15 kg/hr by the use of a biaxial extruder having a 36 mm kneading desk to form pellets, and these pellets were then molded through an injection molding machine having a mold fastening pressure of 100 tons to obtain test pieces for the measurement of physical properties. Table 2 shows a blend ratio of the resin and the inorganic filler, a melt index (MI), flexural modulus, heat distortion temperature, Izod impact strength at 23°C, tensile elongation at break and low brittle temperature.

Example 5

The same procedure as in Example 2 was carried out except that 0.5 part by weight of glycerin monostearate was added as a higher fatty acid, to form pellets and to mold them, thereby obtaining test pieces for the measurement of physical properties, and the physical properties were then measured. Table 2 shows a blend ratio of a resin and an inorganic filler, a melt index (MI), flexural modulus, heat distortion temperature, Izod impact strength at 23°C, tensile elongation at break and low brittle temperature. The Izod impact strength at 23°C was more excellent than in Example 2.

Comparative Examples 1 to 4

The same polypropylene, talc and thermal stabilizer as in Examples 1 to 4 were used, and the same procedure as in Examples 1 to 4 was carried out except that zinc stearate was replaced with the same amount of calcium stearate, to form pellets and to mold them, thereby obtaining test pieces for the measurement of physical properties, and the physical properties were then measured. Table 2 shows a blend ratio of a resin and an inorganic filler, a melt index (MI), flexural modulus, heat distortion temperature, Izod impact strength at 23°C, tensile elongation at break and low brittle temperature. The melt index (MI) and the flexural modulus were poorer than in Examples 1 to 4.

In the table of the present specification, MIzn/MIca is shown a melt index ratio of the composition using Zn stearate to these of the composition using Ca stearate.

Table－2

| | | Resin compositions and physical properties | | | | |
|---|---|---|---|---|---|---|
| | Unit | Ex-1 | Ex-2 | Ex-3 | Ex-4 | Ex-5 |
| PP1 | Parts by weight | 45 | 45 | 45 | 45 | 45 |
| PP2 | | 45 | 45 | 45 | 45 | 45 |
| Talc | | 10 | 10 | 10 | 10 | 10 |
| Zinc Stearate | | 0.3 | 0.5 | 1.0 | 1.5 | 0.5 |
| Calcium Stearate | | | | | | |
| Glycerin monostearte | | | | | | 0.5 |
| Melt index MI | g/10min | 28 | 30 | 33 | 35 | 31 |
| $MI_{Zn}/MI_{Ca}$ | | 1.4 | 1.4 | 1.5 | 1.5 | 1.5 |
| Izood impact (23℃) | kg・cm/cm | 6.8 | 7.0 | 7.1 | 6.5 | 8.0 |
| Flexural modulus | kg/cm² | 21500 | 22000 | 22500 | 21500 | 22200 |
| Heat distortion tem. | ℃ | 139 | 138 | 135 | 130 | 135 |
| Tensile elongation | % | 500 | 600 | 600 | 400 | 600 |
| Low brittle temperature | ℃ | 7 | 6 | 8 | 7 | 7 |

Table-2 (cont'd)

| | | Resin compositions and properties | | | |
|---|---|---|---|---|---|
| | Unit | Com-Ex-1 | Com-Ex-2 | Com-Ex-3 | Com-Ex-4 |
| PP1 | Parts by weight | 45 | 45 | 45 | 45 |
| PP2 | | 45 | 45 | 45 | 45 |
| Talc | | 10 | 10 | 10 | 10 |
| Zinc Stearate | | | | | |
| Calcium stearate | | 0.3 | 0.5 | 1.0 | 1.5 |
| Glycerin monostearte | | | | | |
| Melt index MI | g/10min | 20 | 21 | 22 | 23 |
| $MI_{Zn}/MI_{Ca}$ | | — | — | — | — |
| Izod impact (23℃) | kg・cm/cm | 6.7 | 6.9 | 6.5 | 6.3 |
| Flexural modulus | kg/cm² | 21500 | 21800 | 21700 | 21400 |
| Heat distortion tem. | ℃ | 138 | 137 | 135 | 128 |
| Tensile elongation | % | 400 | 500 | 600 | 500 |
| Low brittle temperature | ℃ | 6 | 7 | 8 | 7 |

<u>Examples 6 to 8</u>

The same talc and thermal stabilizer as in Example 5 were used, and the same procedure as in Example 5 was carried out except that propylene ethylene block copolymers PP-3 and PP-4 shown in Table 1 were used

in a homopolymerization part and a copolymerization part, respectively, to form pellets and to mold them, thereby obtaining test pieces for the measurement of physical properties. Table 3 shows a blend ratio of a resin and an inorganic filler, a melt index (MI), flexural modulus, heat distortion temperature, Izod impact strength at 23°C, tensile elongation at break and low brittle temperature.

Comparative Examples 5 to 7

The same procedure as in Examples 6 to 8 was carried out except that zinc stearate was replaced with calcium stearate, to form pellets and to mold them, thereby obtaining test pieces for the measurement of physical properties. Table 3 shows a blend ratio of a resin and an inorganic filler, a melt index (MI), flexural modulus, heat distortion temperature, Izod impact strength at 23°C, tensile elongation at break and low brittle temperature. The melt index (MI) and the flexural modulus were poorer than in Examples 9 to 11.

Comparative Examples 8 to 10

The same talc and thermal stabilizer as in Examples 5 to 7 were used, and the same procedure as in Examples 5 to 7 was carried out except that propylene ethylene block copolymers PP-5 and PP-6 shown in Table 3 were used in a homo-part and a copolymerization part, respectively, to form pellets and to mold them, thereby obtaining test pieces for the measurement of physical properties. Table 3 shows a blend ratio of a resin and an inorganic filler, a melt index (MI), flexural modulus, heat distortion temperature, Izod impact strength at 23°C, tensile elongation at break and low brittle temperature. When a difference of [η] was not present between the copolymerization parts, the low brittle temperature and-the Izod impact strength were poorer than in Example 6. When the propylene ethylene block copolymer having the copolymer part in which the [η] was very high was used, the dispersion of the copolymerization part into the matrix phase of the homo-part was poor, so that spittings appeared on the surface of a molded article. In addition, the low brittle temperature and the Izod impact strength were also poor.

Table-3

| | | Resin compositions and physical properties | | | | |
|---|---|---|---|---|---|---|
| | Unit | Ex-6 | Ex-7 | Ex-8 | Ex-5 | Ex-6 |
| PP3 | Parts by weight | 70 | 50 | 30 | 70 | 50 |
| PP4 | | 22 | 42 | 62 | 22 | 42 |
| PP5 | | | | | | |
| PP6 | | | | | | |
| PP7 | | | | | | |
| PP8 | | | | | | |
| Talc | | 8 | 8 | 8 | 8 | 8 |
| Zinc Stearate | | 0.5 | 0.5 | 0.5 | | |
| Calcium stearate | | | | | 0.5 | 0.5 |
| Glycerin monostearte | | 0.5 | 0.5 | 0.5 | 0.5 | 0.5 |
| Melt index MI | g/10min | 40 | 38 | 37 | 28 | 29 |
| $MI_{Zn}/MI_{Ca}$ | | 1.4 | 1.4 | 1.4 | — | — |
| Izod impact (23°C) | kg·cm/cm | 8.2 | 10.0 | 12.0 | 7.5 | 9.0 |
| Flexural modulus | kg/cm² | 20800 | 20000 | 19000 | 19800 | 19300 |
| Heat distortion tem. | °C | 133 | 130 | 128 | 131 | 130 |
| Tensile elongation | % | 500 | 400 | 300 | 500 | 380 |
| Low brittle temperature | °C | 0 | 2 | 4 | 1 | 3 |

Table-3 (cont'd)

| | | Resin compositions, physical properties | | | |
|---|---|---|---|---|---|
| | unit | Com-Ex-7 | Com-Ex-8 | Com-Ex-9 | Com-Ex-10 |
| PP3 | Parts by weight | 30 | | | |
| PP4 | | 62 | | | |
| PP5 | | | 92 | | |
| PP6 | | | | 92 | |
| PP7 | | | | | 70 |
| PP8 | | | | | 22 |
| Talc | | 8 | 8 | 8 | 8 |
| Zinc Stearate | | | | | |
| Calcium stearate | | 0.5 | 0.5 | 0.5 | 0.5 |
| Glycerin monostearte | | 0.5 | 0.5 | 0.5 | 0.5 |
| Melt index MI | g/10min | 27 | 27 | 26 | 26 |
| $MI_{Zn}/MI_{Ca}$ | | — | — | — | — |
| Izod impact (23℃) | kg・cm/cm | 10.0 | 7.5 | 7.0 | 6.8 |
| Flexural modulus | kg/cm² | 18500 | 19100 | 19000 | 20500 |
| Heat distortion tem. | ℃ | 127 | 129 | 128 | 130 |
| Tensile elongation | % | 310 | 100 | 250 | 50 |
| Low brittle temperature | ℃ | 5 | 6 | 8 | 12 |

Examples 9 and 10

Preparation process of multi-stage block copolymer PP-9 to PP-12 and PP-14 shown in Table 4 were each produced by performing polymerization in two steps under such copolymerization part formation conditions as to produce different polymers in accordance with the same preparation process (1) of a propylene ethylene block copolymer as described in Example 1.

Furthermore, PP-13 was produced by performing polymerization in two steps under such copolymerization part formation conditions as to produce different polymers in accordance with the same preparation process (2) of a propylene ethylene block copolymer as described in Example 1.

Table-4

| | homopolymerization part | | 1st copolymerization part | | | 2nd copolymerization part | | | MI of block copolymer |
|---|---|---|---|---|---|---|---|---|---|
| | [η] | Mw/Mn | amount | [η] | Ratio of EL/PL | amount | [η] | ratio of EL/PL | |
| unit | dl/g | | wt% | | wt | wt% | dl/g | wt | g/10min |
| PP 9 | 0.85 | 6 | 6.0 | 8.1 | 0.7 | 12.0 | 11.0 | 1.5 | 15 |
| PP10 | 1.35 | 6 | 6.0 | 4.0 | 0.7 | 12.0 | 4.0 | 1.6 | 7 |
| PP11 | 1.0 | 6 | 9.0 | 4.5 | 0.6 | 9.0 | 5.0 | 1.5 | 26 |
| PP12 | 0.92 | 6 | 9.0 | 6.5 | 1.0 | 9.0 | 6.7 | 1.2 | 24 |
| PP13 | 1.00 | 8 | 6.0 | 4.0 | 0.7 | 12.0 | 9.0 | 1.5 | 20 |
| PP14 | 1.02 | 8 | 5.8 | 6.5 | 0.7 | 12.3 | 6.6 | 1.6 | 18 |

The same procedure as in Example 5 was carried out except that propylene ethylene block copolymers PP-9 and PP-10 were used and blended, to form pellets and to mold them, thereby obtaining test pieces for the measurement of physical properties. Table 5 shows a blend ratio of a resin and an inorganic filler, a melt index (MI), flexural modulus, heat distortion temperature, Izod impact strength at 23°C, tensile elongation at break and low brittle temperature.

Comparative Examples 11 and 12

The same procedure as in Examples 9 and 10 was carried out except that zinc stearate was replaced with calcium stearate, to form pellets and to mold them, thereby obtaining test pieces for the measurement of physical properties. Table 5 shows a blend ratio of a resin and an inorganic filler, a melt index (MI), flexural modulus, heat distortion temperature, Izod impact strength at 23°C, tensile elongation at break and low brittle temperature. The flexural modulus and the melt index were lower than in Example 9.

Example 11

The same procedure as in Example 5 was carried out to pelletize a mixture of a propylene ethylene elastomer "Vistalon 878P" (made by Exon Chemical Co., Ltd., Mooney viscosity = 100, propylene content = 50% by weight) and each of propylene ethylene block copolymers PP-9 and PP-11 having copolymerization parts formed by polymerization in two steps as shown in Table 5, followed by molding, thereby preparing test pieces for the measurement of physical properties. Table 5 shows a blend ratio of a resin and an inorganic filler, a melt index (MI), flexural modulus, heat distortion temperature, Izod impact strength at 23°C, tensile elongation at break and low brittle temperature.

Comparative Example 13

The same procedure as in Example 11 was carried out except that zinc stearate was replaced with calcium stearate, to form pellets and to mold them, thereby obtaining test pieces for the measurement of physical properties. Table 5 shows a blend ratio of a resin and an inorganic filler, a melt index (MI), flexural modulus, heat distortion temperature, Izod impact strength at 23°C, tensile elongation at break and low brittle temperature. The melt index was lower than in Example 11.

Example 12

The same procedure as in Example 9 was carried out except that a propylene ethylene block copolymer PP-13 having copolymerization parts with different [η] values which was formed by polymerization in two step as shown in Table 4 was used, to form pellets and to mold them, thereby obtaining test pieces for the measurement of physical properties. Table 5 shows a blend ratio of a resin and an inorganic filler, a melt index (MI), flexural modulus, heat distortion temperature, Izod impact strength at 23°C, tensile elongation at break and low brittle temperature.

Comparative Example 14

The same procedure as in Example 12 was carried out except that zinc stearate was replaced with calcium stearate, to form pellets and to mold them, thereby obtaining test pieces for the measurement of physical properties. Table 5 shows a blend ratio of a resin and an inorganic filler, a melt index (MI), flexural modulus, heat distortion temperature, Izod impact strength at 23°C, tensile elongation at break and low brittle temperature. The melt index (MI) and the flexural modulus were lower than in Example 12.

Table-5

| | | Resin composition and properties | | | | |
|---|---|---|---|---|---|---|
| | Unit | Ex-9 | Ex-10 | Ex-11 | Com-Ex12 | Ex-11 |
| PP 9 | Parts by weight | 65 | 60 | 65 | 60 | 34 |
| PP10 | | 15 | 10 | 15 | 10 | |
| PP11 | | | | | | 34 |
| PP12 | | | | | | |
| PP13 | | | | | | |
| PP14 | | | | | | |
| EPR | | | | | | 12 |
| Talc | | 10 | 20 | 10 | 20 | 20 |
| Zinc Stearate | | 0.5 | 0.5 | | | 0.5 |
| Calcium stearate | | | | 0.5 | 0.5 | |
| Glycerin monostearte | | 0.5 | 0.5 | 0.5 | 0.5 | 0.5 |
| Melt index MI | g/10min | 18 | 18 | 14 | 13 | 17 |
| $MI_{Zn}/MI_{Ca}$ | | 1.3 | 1.4 | – | – | 1.4 |
| Izod impact (23°C) | kg・cm/cm | 8.5 | 5.0 | 6.8 | 4.5 | 15.0 |
| Flexural modulus | kg/cm² | 20800 | 26000 | 20000 | 25200 | 23000 |
| Heat distortion tem. | °C | 133 | 138 | 130 | 137 | 130 |
| Tensile elongation | % | 500 | 60 | 400 | 45 | 300 |
| Low brittle temperature | °C | 8 | 23 | 9 | 25 | -1 |

Table－5 (cont'd)

| | | composition, properties | | |
|---|---|---|---|---|
| | Unit | Com-Ex13 | Ex-12 | Com-Ex14 |
| PP 9 | Parts by weight | 34 | | |
| P10 | | | | |
| PP11 | | 34 | | |
| PP12 | | | | |
| PP13 | | | 90 | 90 |
| PP14 | | | | |
| EPR | | 12 | | |
| Talc | | 20 | 10 | 10 |
| Zinc Stearate | | | 0.5 | |
| Calcium stearate | | 0.5 | | 0.5 |
| Glycerin monostearte | | 0.5 | 0.5 | 0.5 |
| melt index MI | g/10min | 12 | 28 | 21 |
| $MI_{Zn}/MI_{Ca}$ | | — | 1.3 | — |
| Izod impact (23℃) | kg・cm/cm | 13.0 | 7.5 | 6.8 |
| Flexural modulus | kg/cm² | 22000 | 20800 | 19800 |
| Heat distortion tem. | ℃ | 128 | 134 | 132 |
| Tensile elongation | % | 300 | 500 | 400 |
| Low brittle temperature | ℃ | －1 | 10 | 13 |

Examples 13 and 14

In a Henschel mixer were placed 100 parts by weight of an ethylene propylene block copolymer powder (PP-9) in which a molecular weight distribution (Mw/Mn) of a homo-part was 8.0, an ethylene/propylene ratio of a copolymerization part was 2/1 (by weight), a copolymerization part content was 15% by weight and a melt index was 20 g/10 min, 10 parts by weight of talc "JA13R" (Made by Asada Flour Milling Co., Ltd.) as an inorganic filler, 0.05 part by weight of "Ionol" (made by Shell Petrochemical Co., Ltd.) and 0.2 part by weight of "Irganox 1010" (made by Ciba-Geigy) as phenolic antioxidants, 0.2 part by weight of "Adekastab LA-52 (made by Asahi Denka Kogyo K.K.) as a hindered phenolic light stabilizer in which the hydrogen atoms of an amine group was substituted by a methyl group and 0.5 part by weight of zinc stearate or zinc oleate as a metallic soap, and they were then mixed by the Henschel mixer. Afterward, the mixture was extruded at 22°C under 15 kg/hr by the use of a biaxial extruder having a 36 mm kneading desk to form pellets, and these pellets were then molded through an injection molding machine having a mold fastening pressure of 100 tons to obtain test pieces for the measurement of physical properties. Table 6 shows a blend ratio of the resin and the inorganic filler, a melt index (MI), flexural modulus, tensile elongation at break, heat distortion temperature, Izod impact strength, color change properties and migration properties. It was confirmed that the melt index was increased and the flexural modulus was also improved by adding zinc stearate or zinc oleate.

Example 15

The same procedure as in Example 13 was carried out except that "Ionol" was replaced with 0.1 part by weight of "Etanox 330" (made by Ethyl Corporation) as a phenolic antioxidant, to form pellets and to mold them, thereby obtaining test pieces for the measurement of physical properties. Table 6 shows a blend ratio of a resin and an inorganic filler, a melt index (MI), flexural modulus, tensile elongation at break, heat distortion temperature, Izod impact strength, color change properties and migration properties.

Example 16

The same procedure as in Example 13 was carried out except that "Ionol" was replaced with 0.5 part by weight of "Etanox 330" (made by Ethyl Corporation) as a phenolic antioxidant and 0.5 parts by weight of glycerin monostearate as a higher fatty acid ester was added, to form pellets and to mold them, thereby obtaining test pieces for the measurement of physical properties. Table 6 shows a blend ratio of a resin and an inorganic filler, a melt index (MI), flexural modulus, tensile elongation at break, heat distortion temperature, Izod impact strength, color change properties and migration properties. In particular, the color change properties were excellent.

Table- 6

| | Unit | Ex-13 | Ex-14 | Ex-15 | Ex-16 |
|---|---|---|---|---|---|
| PP-1 | Parts by weight | 100 | 100 | 100 | 100 |
| Talk (JA13R) | | 10 | 10 | 10 | 10 |
| Ionol | | 0.05 | 0.05 | | |
| Irganox 1010 | | 0.2 | 0.2 | 0.2 | 0.2 |
| Etanox 330 | | | | 0.1 | 0.1 |
| Irganox 168 | | | | | |
| Zinc stearate | | 0.5 | | 0.5 | 0.5 |
| Zinc oleate | | | 0.5 | | |
| Calcium stearate | | | | | |
| Adekastab LA-52 | | 0.2 | 0.2 | 0.2 | 0.2 |
| Adekastab LA-57 | | | | | |
| Glycerin monostearte | | | | | 0.5 |
| Migration properties | | no | no | no | no |
| MI | g/10min | 29 | 27 | 29 | 30 |
| Izod impact | kgcm/cm | 5.0 | 4.8 | 5.0 | 5.6 |
| Flexural modulus | kg/cm² | 18000 | 17500 | 18100 | 18000 |
| Heat distortion tem. | ℃ | 71 | 68 | 70 | 70 |
| Tensile elongation | % | 500 | 500 | 500 | 500 |
| Low brittle temperature | ℃ | 15 | 15 | 15 | 15 |
| Color change properties | shot | 20 | 21 | 20 | 13 |

Comparative Example 15

The same procedure as in Example 13 was carried out except that zinc stearate was replaced with 0.5

part by weight of calcium stearate as a metallic soap, to form pellets and to mold them, thereby obtaining test pieces for the measurement of physical properties, and the physical properties were then measured. Table 7 shows a blend ratio of a resin and an inorganic filler, a melt index (MI), flexural modulus, tensile elongation at break, heat distortion temperature, Izod impact strength, color change properties and migration properties. A migrate was observed, and the MI, the Izod impact strength, the flexural modulus and the heat distortion temperature were poor. In addition, the color change properties were also poorer than in Example 13.

Comparative Example 16

The same procedure as in Example 17 was carried out except that 0.1 part by weight of calcium stearate was added, to form pellets and to mold them, thereby obtaining test pieces for the measurement of physical properties, and the physical properties were then measured. Table 7 shows a blend ratio of a resin and an inorganic filler, a melt index (MI), flexural modulus, tensile elongation at break, heat distortion temperature, Izod impact strength, color change properties and migration properties. A migrate was not observed, but the tensile elongation at break and the color change properties were poor. In addition, a difference of the MI was scarcely present between this comparative example and Comparative Example 17, and it was observed that the MI was scarcely improved by the addition of calcium stearate.

Comparative Example 17

The same procedure as in Example 1 was carried out except that "Ionol" and "Irganox 1010" as antioxidants were replaced with 0.1 part by weight of "Irganox 168" (made by Ciba-Geigy) as a phosphoric antioxidant, to form pellets and to mold them, thereby obtaining test pieces for the measurement of physical properties, and the physical properties were then measured. Table 7 shows a blend ratio of a resin and an inorganic filler, a melt index (MI), flexural modulus, tensile elongation at break, heat distortion temperature, Izod impact strength, color change properties and migration properties. In particular, the MI was lower than in Example 13.

Comparative Example 18

The same procedure as in Example 1 was carried out except that 0.2 part by weight of "Adekastab LA-57 (made by Asahi Denka Kogyo K.K.) was added as a hindered amine light stabilizer, containing NH group to form pellets and to mold them, thereby obtaining test pieces for the measurement of physical properties, and the physical properties were then measured. Table 7 shows a blend ratio of a resin and an inorganic filler, a melt index (MI), flexural modulus, tensile elongation at break, heat distortion temperature, Izod impact strength, color change properties and migration properties. A migrate was observed, and the migration properties were poor.

Table-7

| | Unit | Com-Ex-15 | Com-Ex-16 | Com-Ex-17 | Com-Ex-18 |
|---|---|---|---|---|---|
| PP-1 | Parts by weight | 100 | 100 | 100 | 100 |
| Talk (JA13R) | | 10 | 10 | 10 | 10 |
| Ionol | | 0.05 | 0.05 | | 0.05 |
| Irganox 1010 | | 0.2 | 0.2 | | 0.2 |
| Etanox 330 | | | | | |
| Irganox 168 | | | | 0.1 | |
| Zinc stearate | | | | 0.5 | 0.5 |
| Zinc oleate | | | | | |
| Calcium stearate | | 0.5 | 0.1 | | |
| Adekastab LA-52 | | 0.2 | 0.2 | 0.2 | |
| Adekastab LA-57 | | | | | 0.2 |
| Glycerin monostearte | | | | | |
| Migration properties | | migrated | no | no | migrated |
| MI | g/10min | 23 | 22 | 22 | 28 |
| Izod impact | kgcm/cm | 4.5 | 4.4 | 5.4 | 5.3 |
| Flexural modulus | kg/cm² | 17000 | 17000 | 17200 | 18000 |
| Heat distortion tem. | ℃ | 67 | 67 | 70 | 70 |
| Tensile elongatioTen | % | 500 | 500 | 500 | 500 |
| Low brittle temperature | ℃ | 15 | 15 | 15 | 15 |
| Color change properties | shot | 25 | 30 | 21 | 21 |

Examples 17 to 19

Mixed were 100 parts by weight of an ethylene propylene block copolymer powder (PP-10) in which a molecular weight distribution (Mw/Mn) of a homo-part was 9.0, an ethylene/propylene ratio of a copolymerization

part was 1.5/1 (by weight), a copolymerization part content was 18% by weight and a melt index was 23 g/10 min, 5 parts, 30 parts and 80 parts by weight of talc "LMS-300" (made by Fuji Talc Co., Ltd.) as an inorganic filler, 0.2 part by weight of "Irganox 1010" (made by Ciba-Geigy) as a phenolic antioxidant, 0.2 part by weight of "Adekastab LA-52 (made by Asahi Denka Kogyo K.K.) as a hindered amine light stabilizer in which an amine group was substituted by a methyl group, 0.5 part by weight of zinc stearate as a metallic soap and 0.5 part by weight of glycerin monostearate, and pelletizing and molding were done in the same manner as in Example 1, thereby obtaining test pieces for the measurement of physical properties, and the physical properties were then measured. Table 8 shows a blend ratio of the resin and the inorganic filler, a melt index (MI), flexural modulus, tensile elongation at break, heat distortion temperature, Izod impact strength, color change properties and migration properties.

Comparative Examples 19 and 20

The same procedure as in Example 17 was carried out except that 200 parts and 0 part by weight of talc were used in 100 parts by weight of an ethylene propylene block copolymer powder (PP-10), to form pellets and to mold them, thereby obtaining test pieces for the measurement of mechanical physical properties. Table 8 shows a blend ratio of a resin and an inorganic filler, a melt index (MI), flexural modulus, tensile elongation at break, heat distortion temperature, Izod impact strength, color change properties and migration properties. In the case that 200 parts by weight of talc was used, the MI was extremely low, so that fluidity was poor. In addition, in the case that no talc was used, the MI was lower than in Example 17, and in a system where no inorganic filler was present, any fluidity improvement effect was not confirmed.

Table-8

| | Unit | Ex-17 | Ex-18 | Ex-19 | Com-Ex-19 | Com-Ex-20 |
|---|---|---|---|---|---|---|
| PP-2<br>LMS-300<br>Irganox 1010<br>Zinc stearate<br>Adekastab LA-52<br>glycerin monostearte | parts by weight | 100<br>5<br>0.2<br>0.5<br>0.2<br>0.5 | 100<br>30<br>0.2<br>0.5<br>0.2<br>0.5 | 100<br>80<br>0.2<br>0.5<br>0.2<br>0.5 | 100<br>200<br>0.2<br>0.5<br>0.2<br>0.5 | 100<br><br>0.2<br>0.5<br>0.2<br>0.5 |
| Migration properties | | no | no | no | no | no |
| Low brittle temmn. | g/10min | 30 | 32 | 22 | 5 | 24 |
| Izod impact | kgcm/cm | 6.8 | 6.0 | 4.0 | 2.5 | 7.0 |
| Flexural modulus | $kg/cm^2$ | 22000 | 31000 | 41500 | 50000 | 17000 |
| Heat distortion tem. | ℃ | 65 | 80 | 89 | 98 | 55 |
| Tensile elongation | % | 100 | 20 | 5 | 1 | 200 |
| Low brittle temp. | ℃ | 3 | 25 | >30 | >30 | -5 |
| Color change properties | shot | 17 | 15 | 20 | 30 | 22 |

Example 20

As a polypropylene, an ethylene propylene block copolymer powder (PP-11) was used in which a molecular weight distribution (Mw/Mn) of a homopolymerization part was 11, an ethylene/propylene ratio of a copolymerization part was 1.5/1 (by weight), a copolymerization part content was 18% by weight and a melt index was 13 g/10 min. A polypropylene (Mw = 10000, maleic anhydride content = 10%) grafted with maleic anhydride was dissolved in tetralin, and then mixed with the same talc as used in Example 18. Afterward, tetralin was completely removed by vaporization to obtain a treated talc (modified polypropylene content = 0.1% by weight). The same procedure as in Example 6 was carried out except that the thus obtained talc was used, to form pellets and to mold them, thereby obtaining test pieces for the measurement of mechanical physical properties. Table 9 shows a blend ratio of a resin and an inorganic filler, a modified polypropylene content after mixing, a melt index (MI), flexural modulus, tensile elongation at break, heat distortion temperature, Izod impact strength, color change properties and migration properties. The tensile elongation at break was more excellent than in Example 18.

Example 21

The same procedure as in Example 20 was carried out except that maleic anhydride was replaced with acrylic acid (modified polypropylene content = 0.1% by weight), to form pellets and to mold them, thereby obtaining test pieces for the measurement of mechanical physical properties. Table 9 shows a blend ratio of a resin and an inorganic filler, a modified polypropylene content after mixing, a melt index (MI), flexural modulus, tensile elongation at break, heat distortion temperature, Izod impact strength, color change properties and migration properties. The tensile elongation at break was more excellent than in Example 20.

Comparative Example 21

The same procedure as in Example 20 was carried out except that a treated talc in which a maleic anhydride modified polypropylene content was 2.0% by weight was used, to form pellets and to mold them, thereby obtaining test pieces for the measurement of mechanical physical properties. Table 9 shows a blend ratio of a resin and an inorganic filler, a modified polypropylene content after mixing, a melt index (MI), flexural modulus, tensile elongation at break, heat distortion temperature, Izod impact strength, color change properties and migration properties. The MI was lower than in Example 18, and the tensile elongation at break was also poor.

Table-9

| | Unit | Ex-20 | Ex-21 | Com-Ex-21 |
|---|---|---|---|---|
| PP-3 | Parts by weight | 100 | 100 | 100 |
| Treated talc | | 30 | 30 | 30 |
| Irganox 1010 | | 0.2 | 0.2 | 0.2 |
| Zinc stearate | | 0.5 | 0.5 | 0.5 |
| Adekastab LA-52 | | 0.2 | 0.2 | 0.2 |
| glycerin monostearte | | 0.5 | 0.5 | 0.5 |
| Grafted PP maleic anh. | | 0.03 | | |
| Grafted PPacrylic acid | | | 0.03 | 0.6 |
| Migration properties | | no | no | no |
| MI | g/10min | 18 | 18 | 13 |
| Izod impact | kgcm/cm | 10 | 11 | 10 |
| Flexural modulus | kg/cm² | 31700 | 31600 | 31500 |
| Heat distortion tem. | ℃ | 82 | 81 | 75 |
| Tensile elongation | % | 400 | 350 | 200 |
| Low brittle temp. | ℃ | 24 | 24 | 26 |
| Color change properties | shot | 15 | 15 | 15 |

Example 22

The same procedure as in Example 20 was carried out except that 100 parts by weight of an ethylene propylene block copolymer powder (PP-11) was used in which a molecular weight distribution (Mw/Mn) of a homopolymerization part was 6, an ethylene/propylene ratio of a copolymerization part was 1.5/1 (by weight), a copolymerization part content was 15% by weight and a melt index was 24 g/10 min, and 30 parts by weight of the same talc as used in Example 8 and 14 parts by weight of an ethylene butene copolymer "EBM 1021P" (butene content = 16% by weight, MI = 30 g/10 min, made by Japan Synthetic Rubber Co., Ltd.) as a post-addition rubber, to form pellets and to mold them, thereby obtaining test pieces for the measurement of mechanical physical properties. Table 10 shows a blend ratio of the resin and the inorganic filler, a modified polypropylene content after mixing, a melt index (MI), flexural modulus, tensile elongation at break, heat distortion temperature, Izod impact strength, color change properties and migration properties.

Example 23

The same procedure as in Example 10 was carried out except that 15 parts by weight of talc and 15 parts by weight of magnesium sulfate "Moshyge" (made by Ube Industries, Ltd.) were used, to form pellets and to mold them, thereby obtaining test pieces for the measurement of mechanical physical properties. Table 10 shows a blend ratio of a resin and an inorganic filler, a modified polypropylene content after mixing, a melt index (MI), flexural modulus, tensile elongation at break, heat distortion temperature, Izod impact strength, color change properties and migration properties. The Izod impact strength and the flexural modulus were more excellent than in Example 22.

Comparative Example 22

The same procedure as in Example 23 was carried out except that 0.3 part by weight of distearyl thiopropionate was further added as a sulfuric antioxidant were used, to form pellets and to mold them, thereby obtaining test pieces for the measurement of mechanical physical properties. Table 10 shows a blend ratio of a resin and an inorganic filler, a modified polypropylene content after mixing, a melt index (MI), flexural modulus, tensile elongation at break, heat distortion temperature, Izod impact strength, color change properties and migration properties. As compared with Example 22, the flexural modulus, the tensile elongation at break, the heat distortion temperature, the Izod impact strength, the color change properties and the migration properties were not so different, but the MI was poorer than in Example 22. Thus, it was confirmed that the addition of the sulfuric antioxidant impeded a fluidity improvement effect by a metallic soap.

Table-10

| | | Ex-22 | Ex-23 | Com-Ex-22 |
|---|---|---|---|---|
| PP-4 | | 100 | 100 | 100 |
| Treated talc | | 30 | 15 | 15 |
| Irganox 1010 | | 0.2 | 0.2 | 0.2 |
| Zinc stearate | | 0.5 | 0.5 | 0.5 |
| Adekastab LA-52 | | 0.2 | 0.2 | 0.2 |
| Glycerin monostearte | | 0.5 | 0.5 | 0.5 |
| Grafted PP maleic anh. | | 0.03 | | |
| EBM1021P | | 14 | 14 | 14 |
| $MgS0_4$ whisker | | | 15 | 15 |
| Distearylthiopropionate | | | | 0.3 |
| Migration properties | | no | no | no |
| MI | /10min | 35 | 35 | 28 |
| Izod impact | gcm/cm | 11 | 15 | 14 |
| Flexural modulus | $g/cm^2$ | 23000 | 28600 | 28500 |
| Heat distortion tem. | °C | 75 | 79 | 79 |
| Tensile elongation | % | 75 | 70 | 50 |
| Low brittle temperature | °C | 3 | 15 | 15 |
| Color change properties | shot | 15 | 15 | 15 |

## Claims

1. A polypropylene resin composition having an improved melt index which comprises 100 parts by weight of a polypropylene, 2 to 100 parts by weight of an inorganic filler, and 0.2 to 2.0 parts by weight of a metallic soap of a fatty acid having 15 to 20 carbon atoms and zinc, such as zinc stearate.

2. The polypropylene resin composition according to Claim 1 wherein the polypropylene is a block copolymer comprising a propylene homopolymerization part and a propylene ethylene copolymerization part obtained by copolymerizing propylene and ethylene after the polymerization of propylene; the polypropylene resin composition contains a copolymerization part A in which a [η] of the copolymerization part of propylene and ethylene is in the range of from 2 to 6 and a copolymerization part B having a [η] of 7 to 15; a weight ratio of A:B is in the range of from 0.1:0.9 to 0.9:0.1; and the polypropylene resin composition has a melt index 1.2 times or more as much as that of a polypropylene resin composition in which zinc stearate is replaced with the same amount of calcium stearate, and for example the melt flow index (MI) of the resin composition is 15 g/10 min or more.

3. The polypropylene resin composition according to Claim 2 wherein the polypropylene is a multi-stage block copolymer comprising a propylene homopolymerization part and a propylene ethylene copolymerization part obtained by copolymerizing propylene and ethylene after the polymerization of propylene; the polypropylene resin composition contains a copolymerization part A in which a [η] of the copolymerization part of propylene and ethylene is in the range of from 2 to 6 and a copolymerization part B having a [η] of 7 to 15; and a weight ratio of A:B is in the range of from 0.1:0.9 to 0.9:0.1.

4. The polypropylene resin composition according to Claim 2 wherein the polypropylene is a block copolymer comprising a propylene homopolymerization part and a propylene ethylene copolymerization part obtained by copolymerizing propylene and ethylene after the polymerization of propylene; the block copolymer comprises at least two block copolymers of a block copolymer containing a copolymerization part A in which a [η] of the copolymerization part of propylene and ethylene is in the range of from 2 to 6 and a block copolymer containing a copolymerization part B having a [η] of 7 to 15; and a weight ratio of A:B is in the range of from 0.1:0.9 to 0.9:0.1.

5. The polypropylene resin composition according to Claim 2 wherein an average [η] of the propylene homopolymerization part of the propylene ethylene block copolymer is in the range of from 0.7 to 1.5.

6. The polypropylene resin composition according to Claim 5 wherein a [η] of the propylene homopolymerization part of the propylene ethylene block copolymer comprises at least two kinds of a high [η]H portion and a low [η]L portion, and a ratio of the [η] of the high [η]H portion to the [η] of the low [η]L portion is in the range of from 1.1 to 2.0, and the average [η] is in the range of from 0.7 to 1.5.

7. A polypropylene resin composition according to Claim 1, which further comprises 0.1 to 0.5 part by weight of a phenolic antioxidant as an antioxidant, and 0.1 to 1.0 parts by weight of a hindered amine light stabilizer in which all hydrogen atoms of amine groups are replaced with alkyl groups, and the composition has a melt index of 15 g/10 min or more.

8. The polypropylene resin composition according to Claim 1 wherein the surfaces of the inorganic filler are treated with a modified polypropylene grafted with an unsaturated carboxylic acid or its derivative in an amount of 0.001 to 0.3 part by weight with respect to 100 part of the polypropylene.

9. The polypropylene resin composition according to Claim 7 which additionally comprises 0.2 to 1 part by weight of a glycerin ester of a higher fatty acid having 15 to 20 carbon atoms, for example glycerin monostearate.

10. The polypropylene resin composition according to any preceding claim, wherein the inorganic filler comprises talc.

European Patent Office

# EUROPEAN SEARCH REPORT

Application Number
EP 94 30 9821

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X<br>Y<br>A | EP-A-0 563 578 (R.T.VANDERBILT)<br>* table I * | 1<br>2-7<br>8-10 | C08K5/34<br>C08L53/00<br>C08K5/09<br>C08K3/34 |
| Y | EP-A-0 137 482 (IDEMITSU)<br>* page 2, last paragraph - page 4, paragraph 1 * | 2-6 | |
| D,Y | EP-A-0 107 805 (ADEKA ARGUS)<br>* page 14, line 14 - page 18, line 10 * | 7 | |
| A | CA-A-857 357 (CHEMCELL)<br>* page 1, line 7 - line 23 * | 1-10 | |

TECHNICAL FIELDS SEARCHED (Int.Cl.6)
C08K
C08L

The present search report has been drawn up for all claims

| Place of search | Date of completion of the search | Examiner |
|---|---|---|
| THE HAGUE | 5 April 1995 | Schmidt, H |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)